Europäisches Patentamt

European Patent Office

Office européen des brevets

(19)

(11) Veröffentlichungsnummer : **0 141 867**
**B1**

(12)                   **EUROPÄISCHE PATENTSCHRIFT**

(45) Veröffentlichungstag der Patentschrift :
09.09.87

(21) Anmeldenummer : 83111286.7

(22) Anmeldetag : 11.11.83

(51) Int. Cl.⁴ : **G 02 C   7/04**

(54) **Bifokale Kontaktlinse vom bivisuellen Typ.**

(43) Veröffentlichungstag der Anmeldung :
22.05.85. Patentblatt 85/21

(45) Bekanntmachung des Hinweises auf die Patenterteilung : 09.09.87 Patentblatt 87/37

(84) Benannte Vertragsstaaten :
CH FR GB IT LI

(56) Entgegenhaltungen :
DE-A- 3 222 099

(73) Patentinhaber : **Titmus Eurocon Kontaktlinsen GmbH
& Co. KG**
**Goldbacher Strasse 57**
**D-8750 Aschaffenburg (DE)**

(72) Erfinder : **Baron, Heinz, Dr. Dipl.-Phys.**
**Im Rosengarten 45**
**D-5020 Frechen-Buschbell (DE)**
Erfinder : **Höfer, Peter**
**Karlsbader Strasse 50**
**D-8750 Aschaffenburg (DE)**
Erfinder : **Schwind, Herbert**
**Im Himbeergrund 9**
**D-8752 Glattbach (DE)**

(74) Vertreter : **Nöth, Heinz, Dipl.-Phys.**
**Patentanwalt Müllerstrasse 1**
**D-8000 München 5 (DE)**

## Beschreibung

Die Erfindung betrifft eine bildsprungfreie bifokale Kontaktlinse vom bivisuellen Typ mit einem Fernteil und einem Nahteil, die unterschiedliche Scheitelbrechwerte aufweisen und einem zwischen dem Nahteil und dem Fernteil liegenden Übergangsbereich, innerhalb welchem der Wechsel zwischen den beiden Scheitelbrechwerten erfolgt.

Für Alterssichtige stehen Kontaktlinsensysteme nach dem bivisuellen und nach dem alternierenden Typ zur Verfügung. Die Linsen nach dem alternierenden Typ umfassen im wesentlichen eine Gruppe von segmentförmig geschliffenen Bifokallinsen mit nach oben oder nach unten geschwungener Trennungslinie (Übergangsbereich zwischen den beiden Scheitelbrechwerten) zwischen Nahteil und Fernteil. Bei diesen Kontaktlinsentypen ist es schwierig, innerhalb der Anpassung die richtige Segmenthöhe zu bestimmen. Außerdem wirkt sich bei einigen dieser Kontaktlinsentypen ein erheblicher Bildsprung aus.

Bei den bekannten bifokalen Kontaktlinsen vom bivisuellen Typ oder Simultantyp liegt der Fernteil im Zentrum der Linse und der Nahteil peripher um den zentrisch angeordneten Fernteil. Derartige konzentrische Kontaktlinsen, welche nach dem Simultan- oder bivisuellen Prinzip arbeiten, sind so anzupassen, daß Fern- und Nahteil den Pupillenbereich gleichzeitig abdecken, und zwar flächenmäßig je zur Hälfte, so daß es zur gleichzeitigen Abbildung des Fern- wie des Nahbereichs kommt. Dieser Kontaktlinsentyp erlaubt es, dünne Minilinsen mit relativ steilen Grundkurven anzupassen, so daß die Hornhauttemperatur niedrig gehalten und der Gasaustausch so wenig wie möglich beeinträchtigt wird. Der Pupillendurchmesser kann groß sein, und anormale Kopfhaltungen sind weder beim Lesen noch beim Blick in die Ferne erforderlich. Als störend werden jedoch Doppelkonturen, vor allem heller Objekte, und damit einhergehend eine Kontrastminderung empfunden. Rotationsbewegungen der konzentrischen Linsentypen vom bivisuellen Typ wirken sich zwar nicht nachteilig aus, so daß zusätzliche Stabilisierungseinrichtungen für die Lagestabilisierung der Linse auf der Hornhaut entfallen können, jedoch ergeben sich Probleme bei der Vertikalbewegung der Linse und aufgrund von Leuchtdichtenunterschieden (Tunneleffekt).

Eine Zusammenstellung verschiedener Bifokallinsensysteme und Möglichkeiten sowie Grenzen ihrer Anpassung sind u. a. in einem Vortrag, gehalten auf der 14.Arbeitstagung der VDC in Nürnberg 1969 von Günter Giefer, mit dem Titel « Die verschiedenen Bifokallinsensysteme-Möglichkeiten und Grenzen ihrer Anpassung » (abgedruckt in NOJ, Juni 1969) und in dem Lehrbuch « Kontaktlinsen » von Heinz Baron (erschienen 1981 im « Verlag Optische Fachveröffentlichung GmbH, Heidelberg ») zusammengefaßt.

Aufgabe der Erfindung ist es, eine bifokale Kontaktlinse vom bivisuellen Typ der eingangs genannten Art zu schaffen, bei der Vertikalbewegungen ohne Einfluß auf das bivisuelle Sehen bleiben.

Diese Aufgabe wird erfindungsgemäß dadurch gelöst, daß bei auf das Auge aufgesetzter Linse der Übergangsbereich in Richtung vom oberen zum unteren Linsenrand verläuft und den Linsenkörper in einen nasalen (näher zur Nase des Trägers liegenden) und einen temporalen (entfernt zur Nase des Trägers liegenden) Linsenbezirk aufteilt, daß der Nahteil im nasalen und der Fernteil im temporalen Linsenbezirk liegen und daß der Linsenkörper zur Stabilisierung der Lage der auf das Auge aufgesetzten Linse eine an sich bekannte Stabilisierungseinrichtung aufweist.

In vorteilhafter Weise verläuft der Übergangsbereich durch den Linsenmittelpunkt hindurch und befindet sich insbesondere in der vertikalen Mittelebene des Linsenkörpers.

Die hierdurch erzielten Vorteile sind darin zu sehen, daß Leuchtdichtenunterschiede sich nicht auswirken. Das erfindungsgemäße Prinzip funktioniert unabhängig vom Pupillenspiel. Außerdem werden Leuchtdichtenunterschiede (Tunneleffekt) vermieden. Die Abschattung einer Zone, wie sie bei konzentrischen Kontaktlinsen nach dem alternierenden Prinzip (Segmenttypen) auftreten können, sind vermieden.

Bei der Erfindung wird der optische Teil der Kontaktlinse in zwei Hälften durch den im wesentlichen vertikal verlaufenden Übergangsbereich aufgeteilt, wobei der Fernteil und der Nahteil den Pupillenbereich gleichzeitig je zur Hälfte abdecken. Selbst bei einer Vertikalbewegung der Linse ergibt sich keinerlei Einfluß auf das bivisuelle Sehen wegen des vertikalen Verlaufs des Übergangsbereichs bzw. der Trennungslinie zwischen Fernteil und Nahteil. Auch bei einer infolge schwacher Beleuchtung oder bei Nacht auftretenden Pupillenerweiterung führt dies nicht zu einem verstärkten Verschwommensehen, weil die Anteile, mit denen der Fernteil und der Nahteil den Pupillenbereich gleichzeitig abdecken, gleich bleiben.

Für die Stabilisierung der Lage der auf dem Auge befindlichen Linse eignen sich bekannte Stabilisierungseinrichtungen. Hierfür können beispielsweise am oberen und unteren Linsenrand vorgesehene sichelförmige Stabilisierungsflanken, welche eine dynamische durch den Lidschlag bewirkte Linsenstabilisierung gewährleisten, entsprechend der deutschen Patentschrift DE-C-24 15 108 zur Anwendung kommen. Auch ist es möglich, die untere Zone der Kontaktlinse schwerer auszugestalten, damit der Gewichtsschwerpunkt unterhalb der horizontalen Linsenachse zu liegen kommt (Prismenballast), wie das beispielsweise bei einer bifokalen Kontaktlinse mit konzentrisch zueinander angeordnetem Nahteil und Fernteil aus der DE-A-1 136 846 bekannt ist. Anstelle des Prismenballasts kann auch ein eingeschmolzener Metallballast zur Lagestabilisierung verwendet werden. Auch ist es möglich, eine an sich bekannte sogenannte Stützkante, mit der die Kontaktlinse auf dem unteren Augenlid aufliegt, zur Lagestabilisierung zu verwenden. Der Prismenballast und die Stützkante können auch gemeinsam zur Anwendung kommen. Ferner eignet sich zur Lagestabilisierung auch eine ovale Gesamtform der Linse. Ferner kann die Rückfläche oder die Vorderfläche periphertorisch für die Lagestabilisierung ausgebildet sein.

Zur Erzielung der unterschiedlichen Scheitelbrechwertbezirke für den Nahteil und den Fernteil eignen sich verschiedene Herstellungsverfahren. Es können, wie beispielsweise aus dem vorstehend erwähnten Vortrag von Günter Giefer « Die verschiedenen Bifokallinsensysteme-Möglichkeiten und Grenzen ihrer Anpassung » (abgedruckt in « NOJ », Juni 1969) bekannt, zwei Materialien mit unterschiedlicher Brechzahl zum Einsatz kommen, wobei eine frontseitige oder eine rückseitige Verschmelzung dieser beiden Materialien zur Anwendung kommen kann. Außerdem kann auch eine unterschiedliche Vorderflächen- oder Rückflächenkrümmung in den beiden Zonen zur Erzielung der unterschiedlichen Scheitelbrechwertbezirke angewendet werden. Ferner eignet sich die kombinierte Anwendung zweier Materialien unterschiedlicher Brechzahlen und unterschiedlicher Oberflächenkrümmungen in den beiden Zonen entweder auf der Vorder- oder auf der Rückseite.

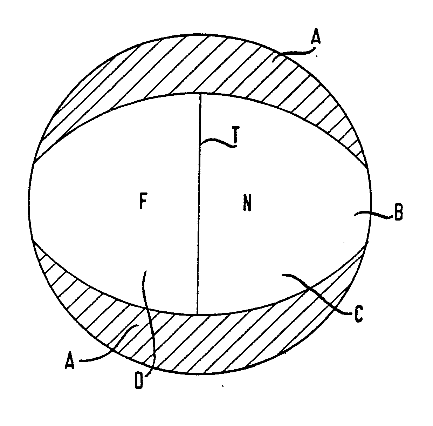

Zur weiteren Erläuterung der Erfindung dient die beiliegende Zeichnung, welche ein Ausführungsbeispiel darstellt.

Die schematisch in der beiliegenden Zeichnung dargestellte bifokale Kontaktlinse vom bivisuellen Typ besitzt einen mit N bezeichneten Nahteil im Linsenbezirk C und einen mit F bezeichneten Fernteil im Linsenbezirk D. Ein Übergangsbereich bzw. eine Trennungslinie T zwischen den beiden Scheitelbrechwerten des Nahteils und des Fernteils verläuft in vertikaler Richtung in der Mittelebene des Kontaktlinsenkörpers. Diese Trennungslinie T erstreckt sich in Richtung vom oberen zum unteren Kontaktlinsenrand. Durch die Trennungslinie wird der Kontaktlinsenkörper aufgeteilt in den Linsenbezirk C für den Nahteil N und den Linsenbezirk D für den Fernteil. Bei auf der Hornhaut aufgesetzter Kontaktlinse befindet sich der Nahteil N näher zur Nase des Trägers im sogenannten nasalen Linsenbezirk C und der Fernteil im entfernt zur Nase des Trägers liegenden sogenannten temporalen Linsenbezirk D. mit B ist eine Lentizone der Linse, welche auf der Vorderseite des Linsenkörpers vorgesehen sein kann, bezeichnet.

Mit A sind sichelförmige Stabilisierungsflanken am oberen und unteren Linsenrand vorgesehen. Mittels dieser aus der deutschen Patentschrift DE-C-24 15 108 bekannten Stabilisierungsflanken A erzielt man eine durch den Lidschlag dynamische Stabilisierung der Lage der Kontaktlinse auf der Hornhaut.

Durch die stabilisierte Lage wird erzielt, daß bei einer Vertikalbewegung der Linse kein Einfluß auf das bivisuelle Sehen eintritt, da die Trennungslinie bzw. der Übergangsbereich zwischen Nahteil N und Fernteil F in vertikaler Richtung verläuft und durch die Trennungslinie dafür Sorge getragen ist, daß der Nahteil und der Fernteil gleichzeitig flächenmäßig je zur Hälfte den Pupillenbereich abdecken.

Die Trennungslinie bzw. der Übergangsbereich kann auch einen von der Senkrechten abweichenden schrägen Verlauf vom unteren zum oberen Linsenrand hin haben.

## Patentansprüche

1. Bifokale Kontaktlinse vom bivisuellen Typ mit einem Fernteil und einem Nahteil, die unterschiedliche Scheitelbrechwerte aufweisen, und einem zwischen dem Nahteil und dem Fernteil liegenden Übergangsbereich, innerhalb welchem der Wechsel zwischen den beiden Scheitelbrechwerten erfolgt, dadurch gekennzeichnet, daß bei auf das Auge aufgesetzter Linse der Übergangsbereich in Richtung vom oberen zum unteren Linsenrand verläuft und den Linsenkörper in einen nasalen und einen temporalen Linsenbezirk aufteilt, daß der Nahteil im nasalen und der Fernteil im temporalen Linsenbezirk liegen und daß die Lage des Übergangsbereiches auf dem Auge durch eine Stabilisierungseinrichtung stabilisiert ist.

2. Bifokale Kontaktlinse nach Anspruch 1, dadurch gekennzeichnet, daß der Übergangsbereich durch den Linsenmittelpunkt hindurch verläuft.

3. Bifokale Kontaktlinse nach Anspruch 1 oder 2, dadurch gekennzeichnet, daß der Übergangsbereich in der vertikalen Mittelebene des Linsenkörpers liegt.

## Claims

1. A bifocal contact lens of bivisual type comprising a far vision portion and a near vision portion which have different vertex refractive indices, and a transitional region which is between the near vision portion and the far vision portion and in which the change between the two vertex refractive indices takes place, characterised in that, with the lens fitted on to the eye, the transitional region extends in the direction from the upper to the lower edge of the lens and divides the lens body into a nasal lens area and a temporal lens area, that the near vision portion is in the nasal lens area and the far vision portion in the temporal lens area, and that the position of the transitional region on the eye is stabilised by a stabilising means.

2. A bifocal contact lens according to claim 1 characterised in that the transitional region extends through the centre point of the lens.

3. A bifocal contact lens according to claim 1 or claim 2 characterised in that the transitional region lies in the vertical centre plane of the lens body.

**Revendications**

1. Lentille de contact bifocale du type bivisuel, comportant une partie vision éloignée et une partie vision rapprochée qui présentent des puissances maximales différentes, et une zone de transition située entre la partie vision rapprochée et la partie vision éloignée, à l'intérieur de laquelle s'effectue l'alternance entre les deux puissances maximales, caractérisée en ce que, une fois la lentille placée sur l'œil, la zone de transition s'étend du bord supérieur de la lentille en une région nasale et une région temporale de façon que la partie vision rapprochée se trouve dans la région nasale de la lentille et la partie vision éloignée se trouve dans la région temporale de la lentille, et en ce que la position de la zone de transition sur l'œil est stabilisée par un dispositif de stabilisation.

2. Lentille de contact bifocale selon la revendication 1, caractérisée en ce que la zone de transition passe par le centre de la lentille.

3. Lentille de contact bifocale selon la revendication 1 ou 2, caractérisée en ce que la zone de transition se trouve dans le plan médian vertical du corps de la lentille.